# EUROPÄISCHE PATENTSCHRIFT

(11) **EP 1 037 767 B1**
(45) Veröffentlichungstag und Bekanntmachung des Hinweises auf die Patenterteilung: **19.09.2001**
(21) Anmeldenummer: 98966544.3
(22) Anmeldetag: 15.12.1998
(51) Int. Cl.: B60R 13/08, B62D 29/00

(54) **ANORDNUNG ZUM TRENNEN VON HOHLRÄUMEN**
ARRANGEMENT FOR SEPARATING CAVITIES
DISPOSITIF PERMETTANT DE SEPARER DES CAVITES

(30) Priorität: 19.12.1997 DE 19756834
(43) Veröffentlichungstag der Anmeldung: 27.09.2000
(73) Patentinhaber: Möller Plast GmbH, 33649 Bielefeld (DE)
(72) Erfinder: BÜNTE, Uwe, D-49565 Bramsche (DE)
(74) Vertreter: Schirmer, Siegfried, Dipl.-Ing.
(86) Internationale Anmeldenummer: DE9803680
(87) Internationale Veröffentlichungsnummer: WO9932328

(56) Entgegenhaltungen:
- EP-A- 0 679 501
- EP-A- 0 730 999
- US-A- 5 506 025
- US-A- 5 631 027
- US-A- 5 642 914

## Beschreibung

Die Erfindung betrifft eine Anordnung zum Trennen von Hohlräumen, insbesondere im Chassis oder der Karosserie von Kraftfahrzeugen zum Zwecke der Abdichtung und Schallisolierung mit einer in dem betreffenden Querschnittsbereich des Hohlraums positionierten Haltevorrichtung für ein Formstück aus expansionsfähigem Material.

Bei einer bekannten Anordnung zur Feuchtigkeitsabdichtung und Schallisolierung in Hohlräumen wird in dem betreffenden Querschnittsbereich eine einstückige Haltevorrichtung aus Kunststoff positioniert, die aus zwei durch innere Verbindungsstege oder -rippen miteinander verbundenen seitlichen Begrenzungswänden besteht, deren Umfangskontur etwa der des abzudichtenden Hohlraumquerschnitts entspricht. In die einteilige Haltevorrichtung wird in der Größe des zwischen deren beiden Begrenzungswänden verbleibenden Zwischenraums ein entsprechendes Formstück aus expansionsfähigem Material eingeführt. Bei Wärmezufuhr, z. B. beim Lackieren der Karosserie von Automobilen, dehnt sich das expansionsfähige Formstück aus, so daß der Werkstoff aus der verbleibenden Öffnung zwischen den beiden Begrenzungswänden der Haltevorrichtung austritt und dabei eine feste Verbindung mit der angrenzenden Innenwand des Hohlraums eingeht. Auf diese Weise wird eine wasserdichte oder schallisolierende Trennung des betreffenden Hohlraums erreicht.

Dieses Verfahren ist jedoch insofern nachteilig, als zum einen die Herstellung der einstückigen Haltevorrichtungen aufgrund hoher Werkzeugkosten sehr kostenaufwendig ist und das Einbringen der Formstücke aus expansionsfähigem Material in die Haltevorrichtung einen hohen Montage- und Zeitaufwand erfordert. Obwohl nur der Randbereich zwischen der Innenwand des Hohlraums und der Haltevorrichtung abgedichtet werden muß, wird im wesentlichen ein vollflächiges, d. h. etwa dem gesamten Querschnitt des Hohlraums entsprechendes expansionsfähiges Formstück eingesetzt, das sich jedoch nur am Rand zum Hohlraum hin ausdehnen kann und in dem mittigen Bereich nicht oder nur zu den Begrenzungswänden hin expandieren kann. Dadurch ist der Verbrauch an expansionsfähigem Material hoch.

Eine gattungsgemässe Anordnung zum zum abdichtem und schallisolieren den Abtrennen von Hohlräumen ist aus EP-A-0 679 501 bekannt.

Der Erfindung liegt daher die Aufgabe zugrunde, eine gattungsgemäße Anordnung zum abdichtenden und schallisolierenden Abtrennen von Hohlräumen anzugeben, die mit geringem Fertigungs- und Materialaufwand kostengünstig hergestellt werden kann.

Erfindungsgemäß wird die Aufgabe mit einer Anordnung gemäß dem Oberbegriff des Patentanspruchs 1 gelöst, die durch zwei separat gefertigte, im Abstand miteinander verrastbare Halbschalen gebildet ist, die im verrasteten Zustand in einem äußeren umlaufenden Randbereich zwischen sich einen freien, zum Außenrand hin offenen Spalt belassen, der nach innen durch eine Innenkontur an einer der Halbschalen begrenzt ist, sowie aus einem als Kontur-Ringscheibe ausgebildeten expansionsfähigem Fomstück besteht, dessen Form im wesentlichen der des zwischen den beiden Halbschalen gebildeten freien Spaltes entspricht.

Zunächst ist eine derartige Halterung aufgrund unkomplizierter Spritzwerkzeuge auf einfache Weise und kostengünstig herstellbar. Zudem ermöglicht die einfache Werkzeugstruktur eine schnelle und leichte Ausführung von Konturänderungen. Ein weiterer Vorteil besteht in der einfachen, automatisierbaren Montage der Formstücke aus expansionsfähigem Material in der Haltevorrichtung. Mit der Anwendung der Erfindung wird schließlich eine Materialeinsparung bei dem eingesetzten expansionsfähigen Werkstoff erreicht, die mehr als 50 % betragen kann. Die Materialeinsparung wird erfindungsgemäß dadurch erreicht, daß das als ringförmige Scheibe mit einer Außenkontur entsprechend dem Querschnitt des abzudichtenden Hohlraums ausgebildete expansionsfähige Material nur dort vorhanden ist, wo es tatsächlich zur Abdichtung benötigt wird und mit einer vorgegebenen Fließrichtung auch ungehindert zur abzudichtenden Hohlkörperwand hin expandieren kann, während der Materialfluß zur Mitte der Halbschalen hin durch die an einer Halbschale vorgesehene Innenkontur begrenzt ist.

Weitere Merkmale und Vorteile sowie zweckmäßige Weiterbildungen der Erfindung ergeben sich aus der nachfolgenden Beschreibung einer bevorzugten Ausführungsform der Erfindung sowie aus den Unteransprüchen.

Ein Ausführungsbeispiel der Erfindung wird anhand der beigefügten Zeichnung näher erläutert. Es zeigen:
- Fig. 1: eine Draufsicht auf die Innenfläche einer ersten Halbschale;
- Fig. 2: eine Draufsicht auf ein expansionsfähiges Formstück;
- Fig. 3: eine Draufsicht auf die Außenfläche einer zweiten Halbschale und
- Fig. 4: eine Schnittansicht einer aus zwei Halteschalen zusammengesetzten Haltevorrichtung mit eingelegtem Formstück im Bereich eines Rastelements der Halbschalen zur Befestigung an einer Hohlkörperwand.

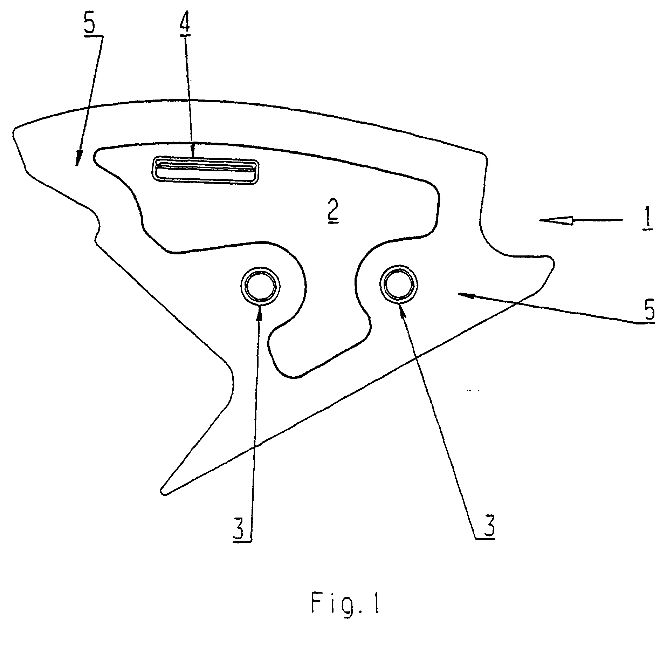

Die Haltevorrichtung besteht aus zwei separaten und in getrennten Spritzgießvorgängen hergestellten Halteschalen, die dadurch mit einfachen Werkzeugen und geringem Zeitaufwand und somit veringerten Kosten gefertigt werden können. Die erste Halbschale 1 (Figur 1) weist in ihrem zentralen Bereich eine Innenkontur 2 sowie zwei angeformte Rastzylinder 3 auf, deren Höhe der des expansionsfähigen Formstücks 8 entspricht. In der erhöhten Innenkontur 2 befindet sich eine Rastöffnung 4. Zwischen der umlaufenden Kante der Innenkontur und der umlaufenden Außenkante der Halbschale 1 verbleibt ein schmaler Randbereich 5.

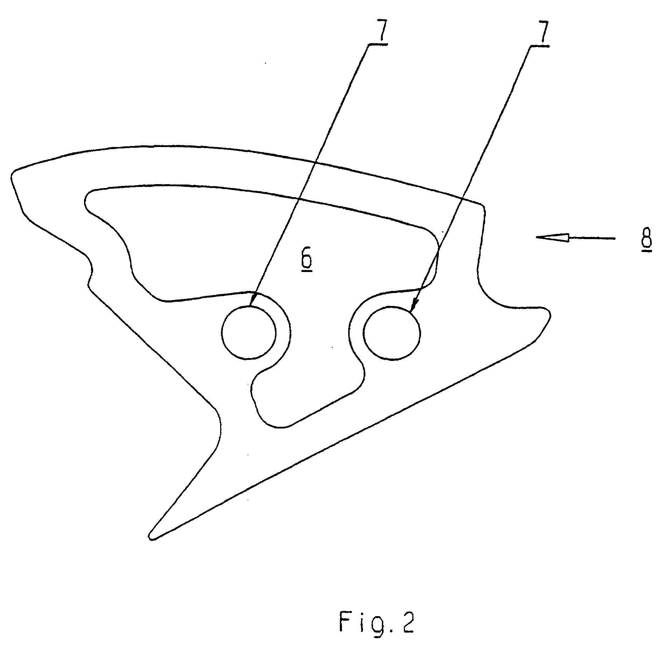

Das expansionsfähige Formstück 8 gemäß Figur 2 weist materialfreie Räume 6, 7 auf, deren Kontur geringfügig größer als die der Innenkontur 2 bzw. des Umfangs eines Rastzylinders 3 der Halbschale 1 ist.

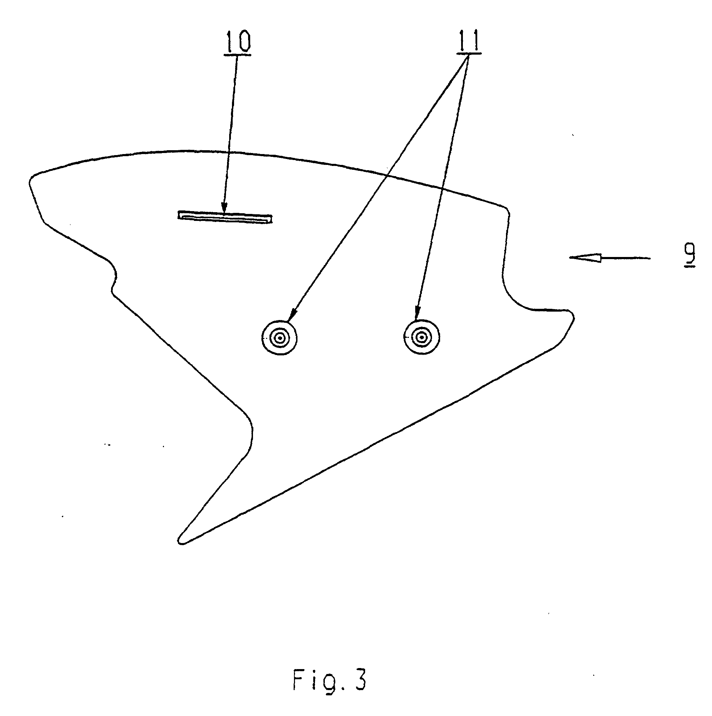

Cie Außenkontur der zweiten Halbschale 9 entspricht der der ersten Halbschale 1 und der des expansionsfähigen Formstücks 8. Die zweite Halbschale 9 ist an der hier sichtbaren Außenfläche eben ausgebildet und weist an der Innenfläche einen Raststeg 10 und zwei Rastpilze 11 (in Figur 3 strichliert angedeutet) auf.

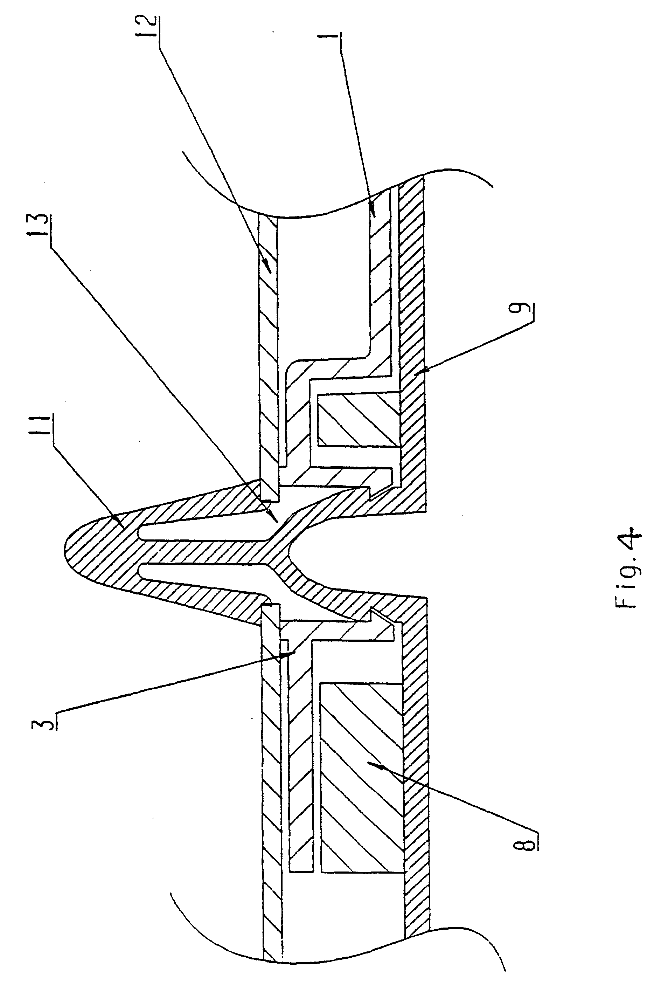

Figur 4 ist eine Schnittansicht zweier miteinander verrasteter Halbschalen 1, 9 mit innenliegendem expansionsfähigem Formstück 8 im Bereich eines Rastpilzes 11 und eines Rastzylinders 3. In Figur 4 ist beispielhaft dargestellt, wie die erste Halbschale 1 an der zweiten Halbschale 9 durch eine Rastverbindung mit dem Rastzylinder 3 gehalten ist, wobei in diesem Fall mit dem Rastpilz 11 gleichzeitig eine Arretierung in einer Öffnung 13 an der Innenwand 12 eines Hohlraums erfolgt. In diesem Fall sind die beiden Halbschalen 1, 9 etwa parallel zur Innenwand 12 eines Hohlraums angeordnet.

Wenn die Haltevorrichtung senkrecht zur Innenwand 12 positioniert wird, befinden sich die Rastpilze 11 an den Außenkanten einer der beiden Halbschalen 1 oder 9 und erstrecken sich in der Richtung von deren Wandfläche.

Die Funktion der Anordnung zum Trennen oder Abtrennen von Hohlräumen zum Zwecke der Abdichtung und Schallisolierung wird nachfolgend beschrieben. Entsprechend dem abzudichtenden Querschnitt, beispielsweise dem Hohlraum einer Kraftfahrzeugkarosserie, werden zwei Halbschalen 1, 9, wie beispielsweise in Figur 1 und 2 dargestellt, im Spritzverfahren hergestellt und die entsprechenden, im wesentlichen eine Kontur-Ringscheibe mit der Außenkontur des abzudichtenden Querschnitts bildenden Formstücke aus expansionsfähigem Material zugeschnitten.

Die drei Scheiben, nämlich die beiden Halbschalen 1, 9 und das Formstück 8, werden in einem automatisierten Prozeß aufeinandergelegt und miteinander verrastet und in dieser Form in dem betreffenden Hohlraum positioniert. Bei der anschließenden Erwärmung dehnt sich das lediglich den Randbereich zwischen den beiden Halbschalen 1, 9 ausfüllende expansionsfähige Formstück 8 in einer vorgegebenen Richtung, nämlich in dem offenen Spalt zwischen den beiden Halbschalen zur benachbarten Innenwand 12 hin aus, während eine Ausdehnung nach innen durch die angeformte Innenkontur 2 und eine Ausdehnung in Querrichtung durch den nicht vorhandenen Materialanteil nicht erfolgen kann.

### Aufstellung der Bezugszeichen:

- 1: erste Halbschale
- 2: Innenkontur
- 3: Rastzylinder
- 4: Rastöffnung
- 5: schmaler Randbereich
- 6, 7: materialfreier Raum
- 8: expansionsfähiges Formstück (Kontur-Ringscheibe)
- 9: zweite Halbschale
- 10: Raststeg
- 11: Rastpilz
- 12: Innenwand (des abzudichtenden Hohlraums)
- 13: öffnung in 12

## Patentansprüche

1. Anordnung zum Trennen von Hohlräumen, insbesondere im Chassis oder der Karosserie von Kraftfahrzeugen zum Zwecke der Abdichtung und Schallisolierung, mit einer in dem betreffenden Querschnittsbereich des Hohlraums positionierten Haltevorrichtung für ein Formstück aus expansionsfähigem Material, **gekennzeichnet durch** zwei separat gefertigte, im Abstand miteinander verrastbare Halbschalen (1) und (9), die im verrasteten Zustand in einem äußeren umlaufenden Randbereich (5) zwischen sich einen freien, zum Außenrand hin offenen Spalt bilden, der nach innen durch eine Innenkontur (2) an einer der Halbschalen (1, 9) begrenzt ist, sowie durch ein als Kontur-Ringscheibe ausgebildetes expansionsfähiges Formstück (8), dessen Form im wesentlichen der des zwischen den beiden Halbschalen (1, 9) gebildeten Spaltes entspricht.

2. Anordnung nach Anspruch 1, **dadurch gekennzeichnet, daß** an den Innenflächen der Halbschalen (1, 9) Rastmittel (3, 11; 4, 10) zur Verbindung der beiden Halbschalen vorgesehen sind.

3. Anordnung nach Anspruch 2, **dadurch gekennzeichnet, daß** eines der Rastmittel als Rastpilz (11) ausgebildet ist, der gleichzeitig in einer Öffnung (13) in der Innenwand (12) des betreffenden abzudichtenden Hohlraums arretierbar ist.

4. Anordnung nach einem der Ansprüche 1 bis 3, **dadurch gekennzeichnet, daß** in dem Bereich der an den Innenflächen der Halbschalen (1, 9) angeordneten Rastmittel (3, 11) in dem Formstück (8) materialfreie Räume (7) vorgesehen sind.

5. Anordnung nach einem der Ansprüche 1 bis 3, **dadurch gekennzeichnet, daß** die Rastmittel (4, 10) im Bereich der Innenkontur (2) der ersten Halbschale (1) und in dem der Innenkontur (2) entsprechenden Bereich der zweiten Halbschale (9) vorgesehen sind.

6. Anordnung nach Anspruch 2, **dadurch gekennzeichnet, daß** das Rastmittel auf der ersten Halbschale (1) ein Rastzylinder (3) ist, der an dem an der zweiten Halbschale (9) angeformten Rastpilz (11) verrastbar ist.

7. Anordnung nach einem der Ansprüche 1 bis 6, **dadurch gekennzeichnet, daß** an einer der Halbschalen (1 oder 9) an der Außenfläche oder am Außenrand Rastmittel zur Verbindung mit der Innenwand (12) des abzutrennenden Hohlraums angeformt sind.

8. Anordnung nach einem der Ansprüche 1 bis 7, **dadurch gekennzeichnet, daß** die Halbschalen (1, 9) im Spritzgießverfahren aus Kunststoff hergestellt sind.

9. Anordnung nach Anspruch 1, **dadurch gekennzeichnet, daß** das expansionsfähige Formstück (8) aus einem unter Wärmeeinwirkung aufschäumenden oder sich ausdehnenden Material besteht, daß in Richtung der offenen Seite des zwischen den Halbschalen (1, 9) gebildeten umlaufenden Spaltes expandiert.

## Claims

1. Arrangement for separating cavities, especially in the chassis or bodywork of motor vehicles, for the purpose of sealing and sound insulation, with a holding device, which is positioned in the relevant cross-sectional region of the cavity, for a moulded member of material capable of expansion, **characterised by** two separately produced half shells (1) and (9) which can be detented together at a spacing and which in the detented state form therebetween in an outer encircling edge region (5) a free gap which is open towards the outer edge and which is inwardly bounded by an inner contour (2) at one of the half shells (1, 9), as well as by a moulded member (8) which is constructed as a contoured annular plate, is capable of expansion and the shape of which substantially corresponds with the gap formed between the two half shells (1, 9).

2. Arrangement according to claim 1, **characterised in that** detent means (3, 11; 4, 10) for connection of the two half shells (1, 9) are provided at the inner surfaces of the half shells.

3. Arrangement according to claim 2, **characterised in that** one of the detent means is constructed as a detent mushroom (11), which is lockable at the same time in an opening (13) in the inner wall (12) of the respective cavity to be sealed off.

4. Arrangement according to one of claims 1 to 3, **characterised in that** material-free spaces (7) are provided in the moulded member (8) in the region of the detent means (3, 11) arranged at the inner surfaces of the half shells (1, 9).

5. Arrangement according to one of claims 1 to 3, **characterised in that** the detent means (4, 10) are provided in the region of the inner contour (2) of the first half shell (1) and in the region, which corresponds to the inner contour (2), of the second half shell (9).

6. Arrangement according to claim 2, **characterised in that** the detent means on the first half shell (1) is a detent cylinder (3) which can be detented at the detent mushroom (11) moulded on at the second half shell (9).

7. Arrangement according to one of claims 1 to 6, **characterised in that** detent means for connection with the inner wall (12) of the cavity to be separated off are moulded on at one of the half shells (1 or 9) at the outer surface or at the outer edge.

8. Arrangement according to one of claims 1 to 7, **characterised in that** the half shells (1, 9) are produced in an injection moulding process from synthetic material.

9. Arrangement according to claim 1, **characterised in that** the moulded member (8) capable of expansion consists of a material which foams or expands under the action of heat and which expands in the direction of the open side of the encircling gap formed between the half shells (1, 9).

## Revendications

1. Système de séparation de volumes creux, en particulier dans le châssis ou la carrosserie de véhicules automobiles, afin de les étancher et les isoler phoniquement, utilisant un dispositif de maintien positionné dans la zone de la section concernée du volume creux, pour tenir une pièce de forme faite d'un matériau expansible,
**caractérisé en ce que**
deux demi-coquilles (1) et (9) fabriquées séparément et pouvant être accrochées l'une à l'autre avec un certain espacement, forment entre elles, dans cet état accroché, dans une zone marginale périphérique externe (5), une fente libre, ouverte vers son bord externe, et délimitée vers l'intérieur par un contour interne (2) d'une des demi-coquilles (1, 9), et une pièce de forme expansible (8) est un anneau de contour dont la forme correspond essentiellement à celle de la fente existant entre les deux demi-coquilles (1, 9).

2. Système selon la revendication 1,
**caractérisé en ce qu'**
il est prévu sur les faces internes des demi-coquilles (1, 9) des moyens d'accrochage (3, 11 ; 4, 10) pour relier les deux demi-coquilles.

3. Système selon la revendication 2,
**caractérisé en ce qu'**
un des moyens d'accrochage a la forme d'un champignon d'accrochage (11) qui peut venir se bloquer en même temps dans une ouverture (13) de la paroi interne (12) du volume creux à étancher.

4. Système selon l'une quelconque des revendications 1 à 3,
**caractérisé en ce que**
dans la zone des moyens d'accrochage (3, 11) montés sur les faces internes des demi-coquilles (1, 9), la pièce de forme (8) comporte des espaces sans matériau.

5. Système selon l'une quelconque des revendications 1 à 3,
**caractérisé en ce que**
les moyens d'accrochage (4, 10) sont prévus dans la zone du contour interne (2) de la première demi-coquille (1) et dans la zone de la seconde demi-coquille (9) correspondant à ce contour interne (2).

6. Système selon la revendication 2,
**caractérisé en ce que**
le moyen d'accrochage sur la première demi-coquille (1) est un cylindre d'accrochage (3) qui peut venir s'accrocher sur le champignon d'accrochage (11) moulé sur la seconde demi-coquille (9).

7. Système selon l'une quelconque des revendications 1 à 6,
**caractérisé en ce que**
sur la surface externe ou au bord externe d'une des demi-coquilles (1 ou 9) sont moulés des moyens d'accrochage pour une liaison avec la paroi interne (12) du volume creux à séparer.

8. Système selon l'une quelconque des revendications 1 à 7,
**caractérisé en ce que**
les deux demi-coquilles (1, 9) sont fabriquées en matière plastique par injection.

9. Système selon la revendication 1,
**caractérisé en ce que**
la pièce de forme expansible (8) est faite d'un matériau pouvant se transformer en mousse ou se dilater sous l'effet de la chaleur, avec expansion en direction du côté ouvert de la fente périphérique existant entre les demi-coquilles (1, 9).
